# EUROPEAN PATENT APPLICATION

(11) **EP 1 762 881 A1**
(43) Date of publication of application: **14.03.2007**
(21) Application number: 05719330.2
(22) Date of filing: 21.02.2005
(51) Int. Cl.: G02B 27/22, G02B 26/08, H04N 13/04

(54) **THREE-DIMENSIONAL IMAGE DISPLAYING SYSTEM**

(30) Priority: 30.06.2004 JP 2004193609
(71) Applicant: MATSUSHITA ELECTRIC INDUSTRIAL CO., LTD., Osaka 571-8501 (JP)
(72) Inventor: TAKAHASHI, T Matsushita Electric Industrial Co.Ltd, Chuo-ku Osaka-shi Osaka 540-6319 (JP); NAKANO, N. Matsushita Electric Industrial Co.,Ltd., Chuo-ku Osaka-shi, Osaka 540-6319 (JP); IWAMI, R. Matsushita Electric Industrial Co.,Ltd., Chuo-ku, Osaka-shi, Osaka 540-6319 (JP); TERADA, T. Matsushita Electric Industrial Co., Ltd, Chuo-ku Osaka-shi, Osaka 540-6319 (JP)
(74) Representative: Balsters, Robert
(86) International application number: PCT/JP2005/002711
(87) International publication number: WO 2006/003737

(57) **Abstract**

A technical object of the present invention is to provide a three-dimensional image displaying system having an ability to provide an observer with a three-dimensional image that is easy to see. In a three-dimensional image displaying system (1) of the present invention, a display device (3) sequentially executes a display process for a piece of data outputted from an image generating device (2) so as to emit a light which is a plurality of lights multiplexed over a time axis, wherein each light represents an object. A focal length changing device (4) gives a sense of three-dimensionality, in other words, a sense of distance to each object included in the light so as to generate a three-dimensional image light having an ability to enter a vision in three-dimensional manner. A reflection component (6) reflects the multiplexed light in a direction of the observer (V) so as to provide the observer with a three-dimensional image in which the object is synthesized. Therefore, not only an image of the object which is currently displayed is visually recognized by the observer, but a residual image of other objects remaining in a retina of the observer (V) is also recognized by the observer (V).

## Description

### TECHNICAL FIELD

The present invention relates to a three-dimensional image displaying system, and more particularly to a three-dimensional image displaying system for displaying an image providing a depth perception, in other words, stereoscopic effect.

### BACKGROUND ART

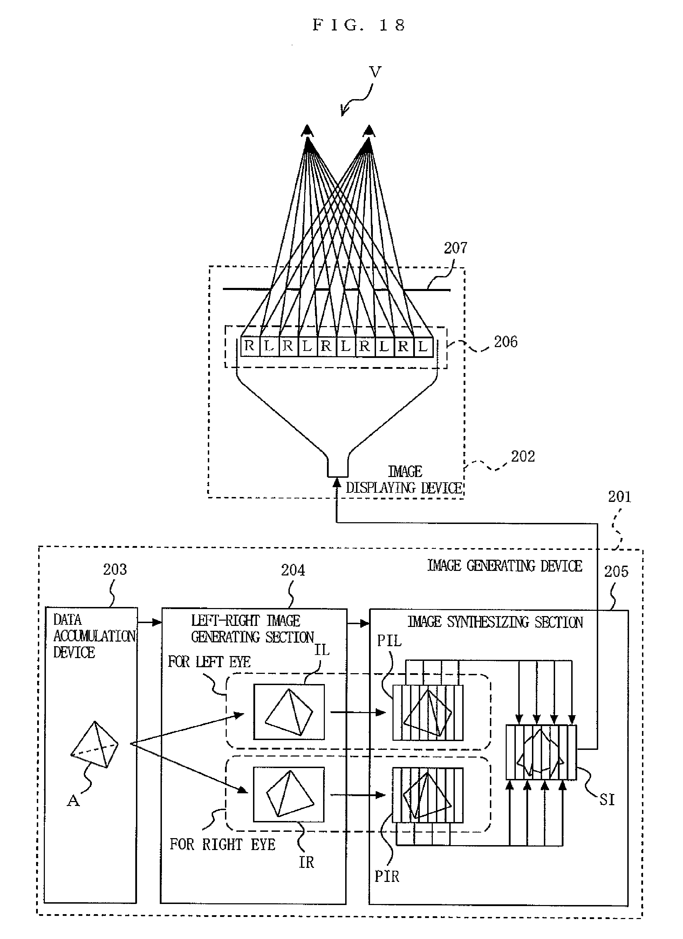

FIG. 18 is a diagram schematically illustrating an example of an entire configuration of a three-dimensional image displaying system described above having applied thereon a parallax barrier method. In FIG. 18, the three-dimensional image displaying system comprises, in general, an image generating device 201 and an image displaying device 202. The image generating device 201 includes a data accumulation section 203, a left-right image generating section 204 and an image synthesizing section 205. Also, the image displaying device 202 includes a display screen 206 and a parallax barrier plate 207 where a grid slit (aperture) is formed.

The data accumulation section 203 stores data representing a shape of an object A, which is an object to be displayed.

The left-right image generating section 204 calculates a parallax between the object A as observed by a left eye and the object A as observed by a right eye of an observer V when observed from a predetermined observation position. The left-right image generating section 204 generates for the left eye an image IL of the object A, and, for the right eye, an image IR of the object A.

The left-right image synthesizing section 204 divides the two images IL and IR, generated by the left-right image generating section 204, into fine strips of images. By this, the image synthesizing section 204 generates for the left eye a plurality of partial images PIL, and, for the right eye, a plurality of partial images PIR. Note that in FIG. 18, one partial image for the left eye is given a link to a reference mark "PIL". In the same manner, a reference mark "PIR" is linked to one partial image for the right eye. The image synthesizing section 204 pieces together the partial images PIL and PIR one by one alternately until all the partial images PIL and PIR are pieced together. By this, the image synthesizing section 204 generates a synthetic image SI which is to be outputted to the image displaying device 202.

The image displaying device 202 displays the inputted synthetic image SI on a display screen 206 of the image displaying device 202.

The observer V, using both of his/her eyes, observes from the observation position via a parallax barrier plate the synthetic image SI which is displayed on the display screen 206. At this point, the partial images PIL in the synthetic image SI reach the left eye of the observer V, but the partial images PIR, which are blocked by the parallax barrier plate, do not reach the right eye of the observer V. On the other hand, to the right eye of the observer V, only the partial images PIR are reached and the partial images PIL are not reached. By this, a parallax is observed and therefore, the observer sees the object A providing stereoscopic effect, or rather, a three-dimensional image is visually recognized by the observer V.

In real-space, human eyes' focal point and an angle of convergence are linked to each other. However, with regards to an image provided by the three-dimensional image displaying system as described above, since the image is displayed on the display screen 206 that is affixed on a predetermined spot, the focal point is adjusted as an eye adjusts for a distance between the point of observation and the display screen 206. On the other hand, the angle of convergence for both eyes is adjusted based on a virtual distance (depth perception), which is between the observer V and a three-dimensional image. Therefore, in a case in which the observer V sees a three-dimensional image, a focal length adjusted by the observer V does not correspond with a virtual distance which is used for adjusting an angle of convergence. That is to say that a divergence arises between the focusing adjustment and the angle of convergence that need to be interlocked with one another, thereby causing the observer V to feel unnatural when seeing the three-dimensional image, or to feel fatigue after seeing the image for a prolong period of time.

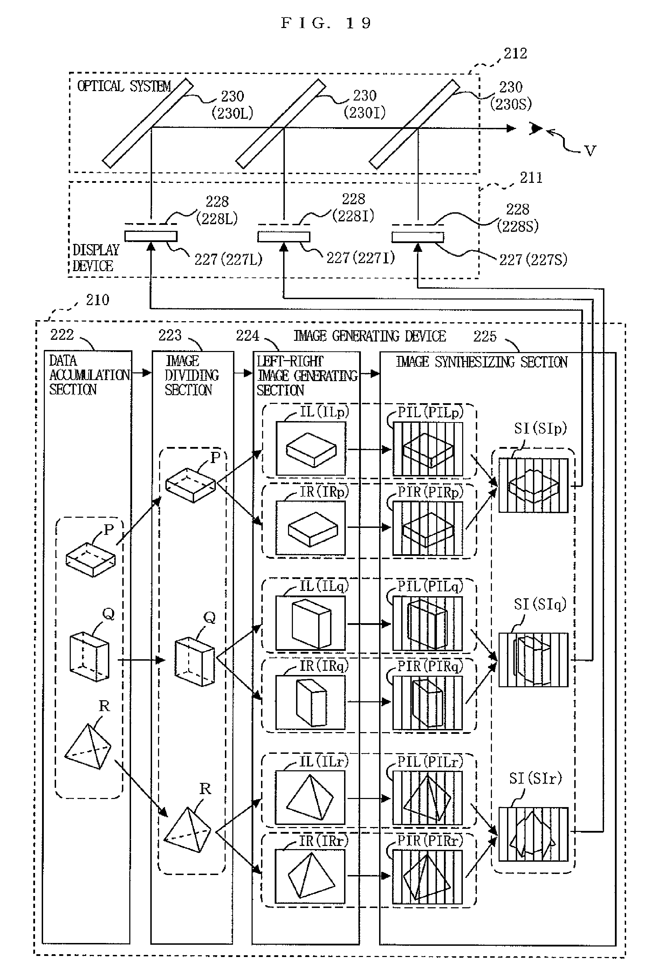

To solve a problem concerning the divergence described above, a three-dimensional image displaying system (hereinafter, referred to as a conventional three-dimensional image displaying system) having applied thereon a half mirror superposition method has been proposed (for example, Japan Laid-Open Patent Publication No. 10-333093) . FIG. 19 is a diagram schematically showing an entire configuration of a conventional three-dimensional image system. In FIG. 19, a three-dimensional image displaying system comprises an image generating device 210, an image displaying device 211 and an optical system 212.

The image generating device 210 includes a data accumulation section 222, an image dividing section 223, a left-right image generating section 224 and an image synthesizing section 225.

The data accumulation section 222 stores data representing a shape for each of a plurality of objects (objects P, Q and R are shown in FIG) which are objects being displayed.

The image dividing section 223 divides the entire piece of data stored in the data accumulation section 222 into a plurality of pieces of data each representing a piece of an object, of one of the objects, located in a distance boundary wherein the distance boundary is measured between the observer V and the piece of object.

For clarity of description, it is supposed that the object P corresponds to a distance boundary (hereinafter, referred to as a long distance boundary) farthest from the observer V, the object R corresponds to a distance boundary (hereinafter, referred to as a short distance boundary) nearest to the observer V, and the object Q corresponds to a distance boundary (hereinafter, referred to as a mid distance boundary) in-between the long distance boundary and the short distance boundary. Under this circumstance, partial data representing the shape of the object P, partial data representing the shape of the object Q, and partial data representing the shape of the object R are to be generated.

The left-right image generating section 224 calculates a parallax which is observed when the observer, using both of his/her eyes, observes from a predetermined observation position images each indicating the objects divided by the image dividing section 223. The left-right image generating section 224 generates based on the calculated parallax an image IL of each object for the left eye and an image IR of each object for the right eye.

Under the aforementioned circumstance, in the left-right image generating section 224 an image ILp of the object P for the left eye and an image IRp of the object P for the right eye, an image ILq of the object Q for the left eye and an image IRq of the object Q for the right eye, and an image ILr of the object R for the left eye and an image IRr of the object R for the right eye are to be generated.

The image synthesizing section 225 divides pairs, each comprised of an image IL and IR, generated in the left-right image generating section 224, into fine strips of images so as to generate a plurality of partial images PIL for the left eye and a plurality of partial images PIR for the right eye. Further, the image synthesizing section 224 selects and pieces together partial images PIL and partial images PIR one by one alternately. By this, the image synthesizing section 224 generates and outputs to a display device 211 a synthetic image SI for each object.

Under the aforementioned circumstance, for the object P, a partial image PILp for the left eye and a partial image PIRp for the right eye are generated from the image ILp for the left eye and the image IRp for the right eye, and then, a synthetic image SIp is generated. In a same manner, for the objects Q and R, synthetic images SIq and SIr are generated.

The display device 211 includes pairs wherein each pair is comprised of a display section 227 and a parallax barrier plate 228, and is assigned to a distance boundary. Each display section 227 receives and displays a specific synthetic image SI, which is generated in the image synthesizing section 225, and is individually assigned thereto in accordance with the distance boundary thereof. Each display section 227 emits a light which represents a synthetic image SI in the direction of a parallax barrier plate 228 belonging to a same pair. In each parallax barrier plate 228, a grid slit is formed, and each parallax barrier plate 228 lets through the light emitted from the display section 227 that is placed in front of the parallax barrier plate 228.

Under the aforementioned circumstance, the display device 211 includes, for a long distance boundary, a pair comprised of a display section 227L and a parallax barrier plate 228L, for a mid distance boundary, a pair comprised of a display section 227I and a parallax barrier plate 228I, and, for a short distance boundary, a pair comprised of a display section 227S and a parallax barrier plate 228S.

The optical system 212 includes a plurality of mirrors 230 each assigned to each aforementioned distance boundary. Of each mirror 230, one that is placed farthest from the observer V is a total reflection mirror, while other mirrors 230 are half mirrors. Also, once a light passes through a parallax barrier plate 228 placed in front of a corresponding mirror 230, and enters a mirror 230, the entering light is to be reflected by the mirror 230. Here, a direction in which each mirror 230 reflects the entering light is arranged, in general, to correspond to a sight line of the observer V. Also, as mentioned above, since the mirrors other than the one that is placed farthest away from the observer V are half mirrors, lights reflected by each mirror 230 are to be synthesized.

Under a circumstance in which aforementioned three distance boundaries are stipulated as described above, the total reflection mirror 230L, which is for a long distance boundary, and two half mirrors, 230I and 230S, which respectively are for a mid distance boundary and a short distance boundary, are to be affixed. The total reflection mirror 230L reflects to the mid distance half mirror 230I a light which has passed through the parallax barrier plate 282L. Also, the half mirror 230I transmits approximately a half of the light reflected by the total reflection mirror 230L, and reflects a part of a light which has transmitted through the parallax barrier plate 228I. By this, the two of the lights are synthesized. Also, the half mirror 230S transmits, in general, a half of the light which is synthesized by the half mirror 230I, and reflects, in general, a half of the light which has transmitted the parallax barrier plate 228I.

By this, when the observer V observes using both of his/her eyes from the predetermined observation position the optical system 212, each partial image PIL reaches only the left eye of the observer V, and each partial image PIR reaches only the right eye of the observer V. Further, since each object is a vision of the observer V while a position of each mirror 230 functions as a virtual screen, it becomes possible for the observer V to see an image having a sense of three-dimensionality due to a binocular parallax. As a result, since the divergence between a focal length adjusted by the eyes of the observer V, and an angle of convergence for the eyes become smaller, the conventional three-dimensional image displaying system can, when compared with a three-dimension image displaying system having applied thereon the parallax barrier method, reduce the abnormal feeling and/or the fatigue felt by the observer.

### DISCLOSURE OF THE INVENTION

### PROBLEMS TO BE SOLVED BY THE INVENTION

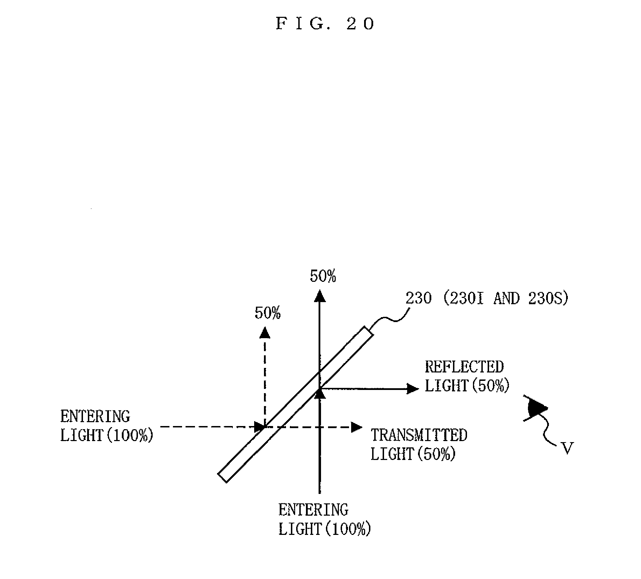

However, the conventional three-dimensional image displaying system is problematic in that, since a light displaying an image is synthesized by the use of half mirrors 230I and 230S, which are positioned in series, the farther a point, at which a light is reflected, is from an observer V, the smaller the quantity of light becomes and thus it becomes difficult for the observer V to recognize the image. To be more specific, as shown in FIG. 20, a characteristic of the half mirrors 230I and 230S is that reflection quantity of light and transmission quantity of light are a half of an incidence quantity of light. Therefore, as with the conventional three-dimensional image displaying system, a quantity of a light, which is reflected by the total reflection mirror 230L and transmits through two half mirrors 230I and 230S, is reduced to one divided by two to the power of two (that is, 25%) of the original after transmitting through the half mirror 230S. In a same manner, after transmitting through n half mirrors 230, a quantity of a light (image) is reduced to one divided by two to the power of n. This means that, as described above, although it becomes possible to provide the observer V with an image having a smooth sense of distance by setting up a virtual screen capable of providing multiple senses of distance by having a increased number of half mirrors 230, the quantity of a light will be reduced accordingly with the number of half mirror 230. Therefore, setting up multiple half mirrors 230 is not suitable for the conventional three-dimensional image displaying system.

In order to counter the decrease of quantity of light while multiple number of half mirrors are set up in the conventional three-dimension image display system, the quantity of a light emitted from each display section 227 can be increased. However, this requires an increase in size for each display section 227 and for a cooling device countering heat generated from the display section 227. As a result, electricity consumption and the size of the system will be increased, which will lead to an increase of a production cost for the system and a maintenance cost.

Also, there are other problems such as an observation position for the observer V is restricted since the parallax barrier method is applied to the conventional three-dimensional image displaying system, or the existence of the parallax barrier plate 228 makes it difficult for the observer V to observe an image.

Therefore, the object of the present invention is to provide a three-dimensional image displaying system, which provides a observer with a three-dimensional image that is easier to see.

### SOLUTION TO THE PROBLEM

In order to achieve above-mentioned object, a first aspect of the present invention is directed to a three-dimensional image displaying system. The three-dimensional image displaying system comprises an image generating device for classifying, in accordance with a perspective distance, respective pieces of data representing a plurality of objects, and for sequentially outputting the data, a display device for sequentially executing a display process for the respective piece of data outputted by the image generating device, and for emitting a plurality of lights, which represent a plurality of objects, multiplexed on a time axis, and at least one focal length changing device for providing stereoscopic effect or a distance perspective to each of the plurality of objects represented in the multiplexed lights emitted by the display device, and for generating the plurality of lights which are visually recognized in a three-dimensional manner. Here, the focal length changing device comprises an optical path branching circuit for branching, by periodically changing at a predetermined interval a tilt of a micro mirror of at least one DMD (Digital Micro-mirror Device) internally included in the optical path branching circuit, a plurality of partial lights each representing an object from the multiplexed light emitted by the display device, a focal length changing section for providing the stereoscopic effect or the distance perspective, which varies among the plurality of objects, to the each of the plurality of objects represented by the partial lights branched by the optical path branching circuit, and an optical path selecting circuit for selecting, by periodically changing at a substantially same interval as the predetermined interval a tilt of a micro mirror of at least one DMD internally included in the optical path branching circuit, at the predetermined interval the plurality of the partial lights emitted from the focal length changing device, for sequentially outputting the selected partial lights, and for generating three-dimensional image lights.

The focal length changing section comprises at least one optical component having a particular focal length assigned to a corresponding one of the plurality partial lights branched by the optical path branching circuit.

The optical component is selected from a group consisting of a convex lens, a concave lens, a convex mirror and a concave mirror. Also, the optical component is, for an exemplary purpose, a holographic optical element.

Also, preferably in the three-dimensional image displaying system, a plurality of the focal length changing devices are optically connected in series.

Also, to be more specific, each focal length changing sections 11 comprises an optical component assigned to a corresponding one of the partial lights branched by the optical path branching circuit. Here, a focal length of a combination of a plurality of focal length changing sections is difference from each other.

Also, preferably, the three-dimensional image displaying system further comprises at least one reflection component for reflecting in a direction of an observer a three-dimensional image light outputted by the focal length changing device. As described above, as the reflection component reflects the three-dimensional image light, a synthesized three-dimensional image of the plurality of objects is visually recognized by the observer.

Also, preferably, the reflection component reflects light outputted by the optical path selecting circuit in a predetermined direction, and transmits light entering in from behind the reflection component in a transmitting direction. Here, the reflection component is, for an exemplary purpose, selected from a group consisting a half mirror, a total reflection mirror and a holographic optical element.

The DMD, in general, includes a plurality of micro mirrors, and, selects, by changing a tilt of at least one a micro mirror of a predetermined position, a part of the light emitted from each display sections. Here, the micro mirror of the predetermined position corresponds to a part in which there is no object in the three-dimensional image represented by the three-dimensional image light. In another exemplary case, the micro mirror of the predetermined position corresponds to a part on a far side of a part in which a plurality of objects overlap with each other in the three-dimensional image represented by the three-dimensional image light.

Also, the reflection component reflects light outputted by the optical path selecting circuit in a direction of the observer, and transmits light entering in from behind the reflection component in a transmitting direction. In this case, the micro mirror of the predetermined position corresponds to a part located farther than where the object existing behind the reflection component is, wherein the object is included in the image represented by the three-dimensional image light.

### EFFECT OF THE INVENTION

According to the aspects mentioned above, by sequentially executing the display process for each piece of data outputted by the image generating device, the display device emits a light, which is a plurality of lights multiplexed over a time axis, and displays each object. The focal length changing device provides stereoscopic effect, in other words, a distance perspective, to each object represented by the light in order to generate a three-dimensional image light that is to be visually recognized in a three-dimensional manner. The reflection component reflects the multiplexed lights in a direction of the observer so as to provide the observer with a synthesized three-dimensional image of the object. Therefore, the image of the object currently displayed is visually recognized by the observer, while a residual image of other objects remaining in the observer's retina is also recognized simultaneously by the observer. These objects are displayed in accordance with the depth of the position of the objects as seen by the observer. By this, it becomes possible for the present invention to provide the observer with a three-dimensional image of each of the plurality of synthesized objects which provide the stereoscopic effect.

Also, since the present three-dimensional image displaying system applies thereon a DMD, an optical loss is reduced, and further, there is no need for a component such as a parallax barrier plate, which is for blocking an optical path. By this, it becomes possible to realize a three-dimensional image displaying system, which is able to provide an observer with a three-dimensional image that is easy to see.

These and other objects, features, aspects and advantages of the present invention will become more apparent from the following detailed description of the present invention when taken in conjunction with the accompanying drawings.

### BRIEF DESCRIPTION OF THE DRAWINGS

[FIG. 1] FIG. 1 is a diagram schematically showing an entire configuration of a three-dimensional image displaying system 1 according to a first embodiment of the present invention.
[FIG. 2A] FIG. 2A is a first schematic diagram showing a detailed motion of DMD 13 and DMD 17 each indicated in FIG.1.
[FIG. 2B] FIG. 2B is a second schematic diagram showing a detailed motion of the DMD 13 and the DMD 17 each indicated in FIG.1.
[FIG. 2C] FIG. 2C is a third schematic diagram showing detailed motion of the DMD 13 and the DMD 17 each indicated in FIG.1.
[FIG. 2D] FIG. 2D is a first schematic diagram showing a reflection of a light reflected by the DMD 13 indicated in FIG. 1.
[FIG. 2E] FIG. 2E is a second schematic diagram showing a reflection of a light reflected by the DMD 13 indicated in FIG. 1.
[FIG. 3] FIG. 3 is a schematic diagram for exemplifying an object displayed by data which is stored in a data accumulation section 8 indicated in FIG. 1.
[FIG. 4] FIG. 4 is a timing chart showing a motion of the DMD 13 and the DMD 17 each indicated in FIG. 1.
[FIG. 5] FIG. 5 is a schematic diagram for exemplifying a virtual screen which is formed virtually by a three-dimensional image displaying system 1 indicated in FIG. 1.
[FIG. 6] FIG. 6 is a state transition diagram showing a transition of an image displayed on each virtual screen indicated in FIG. 5.
[FIG. 7] FIG. 7 is a schematic diagram for exemplifying a three-dimensional image provided a three-dimensional image displaying system 1 indicated in FIG. 1.
[FIG. 8] FIG. 8 is a chart showing an advantage of the three-dimensional image displaying system 1 indicated in FIG. 1.
[FIG. 9] FIG. 9 is a schematic diagram showing a DMD 13a of a variant of the first embodiment (a first variant) as seen from directly above thereof.
[FIG. 10A] FIG. 10A is a schematic diagram showing a state of a micro mirror 22 of the DMD 13a indicated in FIG. 9.
[FIG. 10B] FIG. 10B is a schematic diagram showing how a light which is reflected by the DMD 13a, indicated in FIG. 9, enters and exits from the DMD 17a.
[FIG. 11] FIG. 11 is a schematic diagram for exemplifying a virtual screen which is formed virtually by the three-dimensional image displaying system 1 according to the first variant.
[FIG. 12] FIG. 12 is a state transition diagram showing a transition of an image displayed on the each virtual screen indicated in FIG. 11.

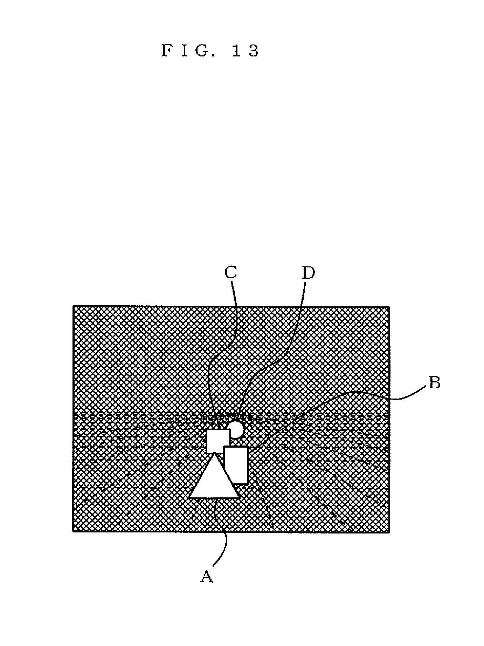

[FIG. 13] FIG. 13 is a schematic diagram for exemplifying a three-dimensional image which is provided by the three-dimensional image displaying system 1 according to the first variant.
[FIG. 14] FIG. 14 is a schematic diagram showing an entire configuration of a three-dimensional image displaying device 101 according to a variant of the first embodiment (a second variant).
[FIG. 15] FIG. 15 is a schematic diagram showing a detailed configuration of a focal length changing device 4a and a focal length changing device 4b each indicated in FIG. 14.
[FIG. 16] FIG. 16 is a schematic diagram showing a part of the three-dimensional image displaying systems 1 or 101 according to a variant of the first embodiment (a third variant).
[FIG. 17] FIG. 17 is a chart showing beneficial aspects of the three-dimensional image displaying systems 1 and 101 indicated in FIG. 16.
[FIG. 18] FIG. 18 is a schematic diagram showing an entire configuration of a common three-dimensional image displaying system having applied thereon parallax barrier method.
[FIG. 19] FIG. 19 is a schematic diagram showing an entire configuration of a conventional three-dimensional image displaying system.
[FIG. 20] FIG. 20 is a schematic diagram showing a problem of the three-dimensional image displaying system indicated in FIG. 17.

### DESCRIPTION OF THE REFERENCE CHARACTERS

- 1, 101.: THREE-DIMENSIONAL IMAGE DISPLAYING SYSTEM
- 2.: IMAGE GENERATING DEVICE
- 8.: DATA ACCUMULATION SECTION
- 9.: IMAGE CLASSIFICATION SECTION
- 3.: DISPLAY DEVICE
- 4, 4A, 4B.: FOCAL LENGTH CHANGING DEVICE
- 10.: OPTICAL PATH BRANCHING CIRCUIT
- 11.: FOCAL LENGTH CHANGING SECTION
- 12.: OPTICAL PATH SELECTING CIRCUIT
- 13.: DMD
- 14.: REFLECTION COMPONENT
- 15, 151, 152.: CONVEX LENS
- 16.: REFLECTION COMPONENT
- 17.: DMD
- 22.: MICRO MIRROR
- 5.: LENS
- 6.: REFLECTION COMPONENT

### BEST MODE FOR CARRYING OUT THE INVENTION

### (Embodiment)

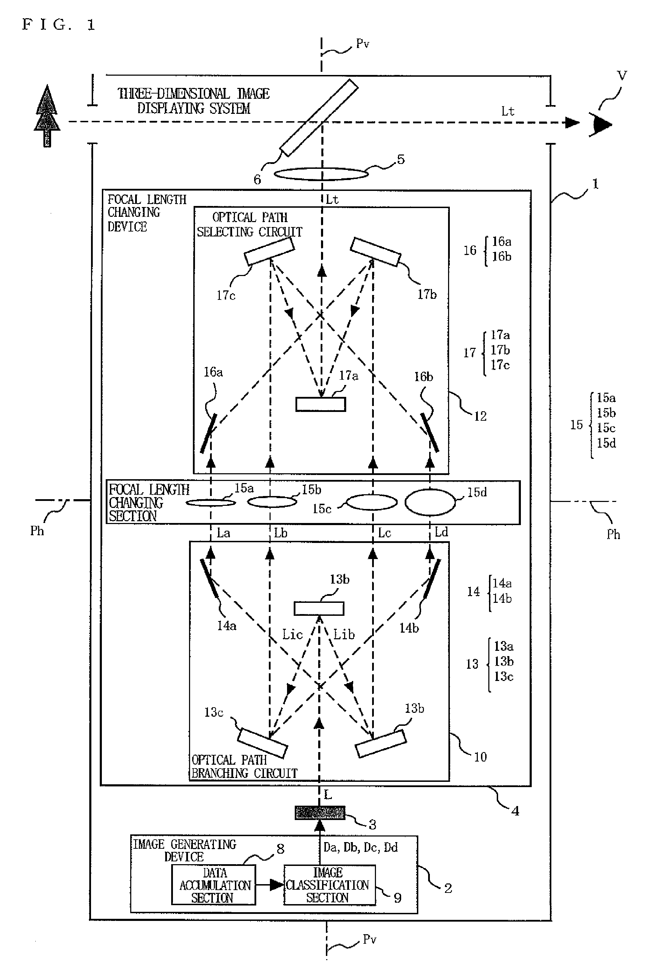

FIG. 1 is a diagram schematically showing an entire configuration of a three-dimensional image displaying system 1 according to a first embodiment of the present invention. In FIG. 1, the three-dimensional image displaying system 1 comprises an image generating device 2, a display device 3, a focal length changing device 4, a lens 5 and a reflection component 6. Also, for clarity of description, a longitudinal median plane Pv (see dash dot-line) and a cross median plane Ph (see alternate long and short dash line), which are orthogonal to each other, are shown in FIG. 1. Also, to avoid complication of the FIGS., the longitudinal median plane Pv and the cross median plane Ph are shown in a manner so as not to penetrate a part, where the three-dimensional image displaying system 1 is depicted.

The image generating device 2 includes a data accumulation section 8 and an image classification section 9 in order to generate data which is to be a basis for a three-dimensional image presented to an observer V.

The data accumulation section 8 stores data representing shapes of a plurality of objects which comprise object to be displayed, and a perspective value (a distance from the observer V) which is designated for each object.

The image classification section 9 classifies the data stored in the data accumulation section 8 into a plurality of pieces of partial data, wherein each piece of data corresponds to a piece of object in a specific distance boundary, which is measured from where the observer V is. Then, the image classification section 9 preferably transmits the classified data in an order starting with the object in a nearest distance boundary, and in an interval of a predetermined time period t. Here, the time period t is selected to be extremely short such that the residual image remains in the observer V's retina. Note that the order of the transmission of the partial data is not restricted to the aforementioned order.

Although, according to the three-dimensional image displaying system 1, a number of distance boundary can be freely selected, a preferable example for the description of the present embodiment is to be 2ⁿ (where n is an integral number) . Further, in the present embodiment n will be, as an exemplary number, described as 2. Under such circumstance, there will be four distance boundaries. Hereinafter, a distance boundary nearest from the observer V will be referred to as a short distance boundary, and a distance boundary farthest from the observer V will be referred to as a long distance boundary. Also, a distance boundary that is in between the short distance boundary and the long distance boundary, and is nearer to the short distance boundary will be referred to as a first mid distance boundary, and a distance boundary that is in between the short distance boundary and the long distance boundary, and is nearer to the long distance boundary will be referred to as a second mid distance boundary. Under such circumstance, the image classification section 9 classifies data into partial data Da representing an object A which corresponds to the short distance boundary, partial data Db representing an object B which corresponds to the first mid distance boundary, partial data Dc representing an object C which corresponds to the second mid distance boundary and partial data Dd representing an object D which corresponds to the long distance boundary, and transmits the partial data Da at a standard clock t0, the partial data Db at time (t0 + 2 x t), and the partial data Dd at time (t0 + 3 x t).

The display device 3 processes each piece of partial data in the order the partial data is transmitted by the image generating device 2, and displays on the display screen of the display device 3 an object represented by each piece of partial data. Note that the display device 3 is arranged behind the image generating device 2 such that a normal line with respect to the center of the display screen exists in the longitudinal median plane Pv. By the process as described above, the display device 3 sequentially emits a light L which represents each object, wherein the data representing each object is classified, in the interval of time t, in the image classification section 9.

Under the circumstance mentioned above, the display device 3 emits a light La that represents the object A at, approximately, a standard clock t0, a light Lb that represents the obj ect B at, approximately, (t0 + t), a light Lc that represents the object C at, approximately, (t0 + 2 x t), and a light Ld that represents the object D at, approximately, (t0 + 3 x t).

The focal length changing device 4 gives a sense of three-dimensionality (a perspective distance) to each object included in outgoing lights L from the display device 3, and generates a three-dimensional image light Lt providing the observer V with stereoscopic effect. In order to execute such process described above, the focal length changing device 4 includes an optical path branching circuit 10, a focal length changing section 11 and an optical path selecting circuit 12.

The optical path branching circuit 10 branches the outgoing lights L outgoing from the display device 3 into a plurality of partial lights in accordance with each object represented thereby. In order to perform the branching of the lights, the optical path branching circuit 10 includes (2ⁿ -1) DMD (Digital Micro-mirror Device) 13 and a predetermined number of reflection component 14.

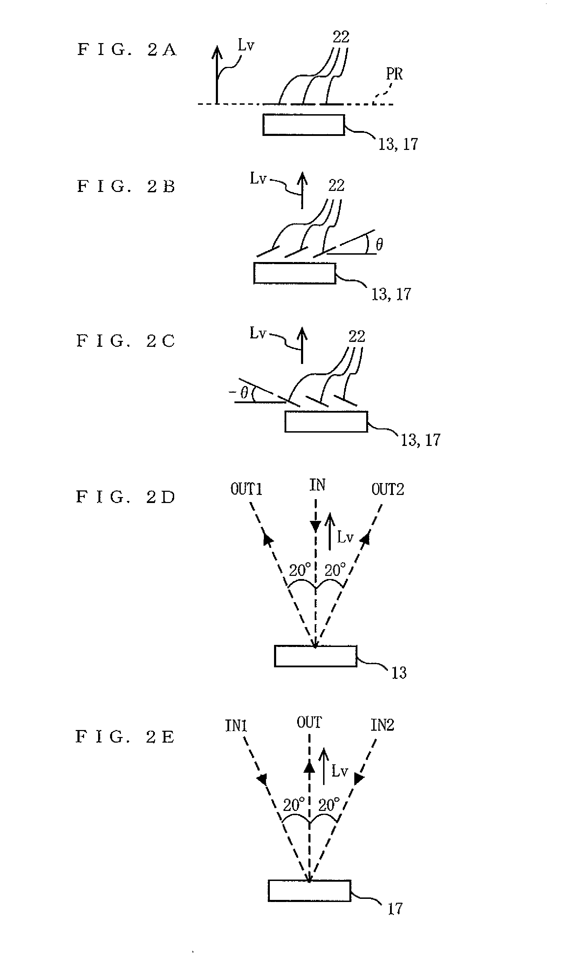

Here, FIG. 2A through FIG. 2C are schematic diagrams showing detailed motions of the DMD 13 indicated in FIG. 1, and FIG. 2D and FIG. 2E are schematic diagrams showing a light as reflected by the DMD 13.

In FIG. 2A through FIG. 2C, the DMD 13 comprises a plurality of micro mirrors 22 each having a flat specular surface. When the DMD 13 is in initial state, all micro mirrors 22 are, without a tilt, practically contained within a coplanar surface (hereinafter, referred to as a datum plane) PR as shown in FIG. 2A. Also, when a first external drive voltage is applied to the DMD 13, all the micro mirrors 22 are, as shown in FIG. 2B, tilted counter clockwise as much as a predetermined angle θ (for example, +10°) with respect to the aforementioned datum plane PR. Also, when a second drive voltage is applied, all the micro mirrors 22 are, as shown in FIG. 2C, tilted clockwise as much as a predetermined angle -θ (for example, -10°) with respect to the aforementioned datum plane PR. Note that there are other types of DMD 13 having micro mirrors 22 which can be tilted to different angles (for example, a combination of +12° and -12°).

Therefore, under a circumstance as shown in FIG. 2B, when a light enters from the direction of the normal line Lv with respect to the datum plane PR into each micro mirror 22, which is to say that when the light enters from a direction indicated by an arrow marked IN in FIG. 2D, each micro mirror 22 reflects the entering light in a direction (a direction indicated by an arrow marked OUT1) of 20° (2 x θ°) to the left with respect to the normal line Lv. On the other hand, when a circumstance is as shown in FIG. 2C, a light entering from the same direction as described above will be reflected in a direction (a direction indicated by an arrow marked OUT2) of 20° (2 x (-θ)°) to the right with respect to the normal line Lv by each micro mirror 22.

Also, under a circumstance as shown in FIG. 2B, when a light enters into each micro mirror 22 from the direction of 20° (that is, 2 x θ) left to the normal line Lv, which is to say that when a light enters from the direction of an arrow IN1 as shown in FIG. 2E, each micro mirror 22 reflects the entering light in the direction of the normal line Lv, which is a direction indicated by an arrow marked OUT as shown in FIG. 2E. On the contrary, under a circumstance as shown in FIG. 2C, each micro mirror 22 reflects a light which enters therein from the direction (see arrow IN2 in FIG. 2E) of 20° (that is, 2 x (-θ)°) to the right of the normal line Lv in the direction of the normal line Lv (see an arrow OUT).

Note that in a description hereinafter, tilting all the micro mirrors 22 by +10° (namely, a circumstance as shown in FIG. 2B) will be referred to as "turning ON", and tilting all the micro mirrors 22 by -10° (namely, a circumstance as shown in FIG. 2C) will be referred to as "turning OFF".

Once again, FIG. 1 will be referenced. As stated above, the optical path branching circuit 10 comprises (2ⁿ - 1) DMD 13. Also, since the present embodiment regards n as 2, the optical path branching circuit 10 is to branch outgoing lights L, coming off the image displaying device 3, into a partial light La representing an object A, a partial light Lb representing an object B, a partial light Lc representing an object C and a partial light Ld representing an object D, and therefore, at least 3 DMDs, DMD 13a, 13b and 13c, are necessary for the DMD 13.

The DMD 13a is arranged in such position that the normal line thereof virtually matches an axis of the outgoing lights L. In the position, the DMD 13a, by a control by a micro mirror 22 as described below, reflects the outgoing lights L coming off the display device 3 in two directions as described above (see FIG. 2D) so as to branch the outgoing lights L into a mid light Lib representing the objects A and C, and a mid light Lic representing the objects B and D.

Also, DMD 13b is arranged in such position that the normal line thereof matches the direction of 20° to the left with respect to the normal line of the DMD 13a. In the position, the aforementioned mid light Lib enters the DMD 13b, and the DMD 13b, by a control by a micro mirror 22 described below, reflects the entering mid light Lib in two directions so as to branch the mid light Lib into a partial light La representing the object A, and a partial light Lc representing the object C. Of the reflected lights, either one of the partial lights La and Lc is parallel to the longitudinal median plane Pv, but the other meets the longitudinal median plane Pv at (4 x θ)°. Note that in FIG. 1, a case where the partial light Lc is parallel to the longitudinal median plane Pv is shown.

The DMD 13c is arranged in such position that is symmetric to that of the DMD 13b with respect to the longitudinal median plane Pv. Due to such positions, the aforementioned mid light Lic enters the DMD 13c. The DMD 13c reflects the entering mid light Lic in two directions so as to branch the mid light Lic into the partial light Lb representing the object B, and the partial light Ld representing the object D. Of the reflected lights, either one of the partial lights Lb and Ld is parallel to the longitudinal median plane Pv, but the other meets the longitudinal median plane Pv at (4 x θ)°. Note that in FIG. 1, a case where the partial light Lc is parallel to the longitudinal median plane Pv is shown.

Also, each reflection component 14 is a component reflecting an entering light entering therein in a direction parallel to the longitudinal median plane Pv, and preferably, is a total reflection mirror. In the present embodiment, due to that the partial lights La and Ld are not parallel to the longitudinal median plane Pv, two reflection components, 14a and 14b, are provided as stated above.

The reflection component 14a reflects the partial light La generated by the DMD 13b so as to make the partial light La parallel to the longitudinal median plane Pv.

The reflection component 14b is arranged in such a position which is symmetric to that of the reflection component 14a with respect to the longitudinal median plane Pv, and reflects the partial light Ld generated by the DMD 13c so as to make the partial light Ld parallel to the longitudinal median plane Pv.

The optical path branching circuit 10 branches the light L which is emitted by the display device 3 into four partial lights, La through Ld, each parallel to the longitudinal median plane Pv. Then the four partial lights exit the optical path branching circuit 10.

The focal length changing section 11 adjusts a position for each of a plurality of virtual images each represented by the partial lights La through Ld which exited from the optical path branching circuit 10. For executing such process, the focal length changing section 11 includes 2ⁿ or (2ⁿ-1) convex lenses 15 each having a different focal length from one another.
In the present embodiment, as an exemplary case where 2ⁿ convex lenses 15 are provided, will be described. Each convex lens 15 is assigned to one partial light, and is arranged in such position that an optical axis of the convex lens matches with an axis of the assigned partial light. Also, each convex lens 15 is arranged along the cross median plane Ph. Also, the shorter the focal length for each of a plurality of the convex lenses 15 is, the farther the distance boundary of the object, represented by the light, assigned thereto is. Each of the convex lenses 15 as described above refracts a partial light exited from the optical path branching circuit 10.

Here, since n equals 2 according to the description in the present embodiment, four convex lenses, 15a, 15b, 15c and 15d, are to be provided. The convex lens 15a has the longest focal length, and refracts the partial light La exiting from the optical path branching circuit 10. Also, the convex lens 15b has the second longest focal length, and refracts the partial light Lb exiting from the optical path branch 10. Also, the convex lens 15c has the third longest focal length, and refracts the partial light Lc exiting from the optical path branching circuit 10. Also, the convex lens 15d has the shortest focal length, and refracts the partial light Ld exiting from the optical path branching circuit 10.

Also, as stated above, the total number of the convex lens can be (2ⁿ - 1) . For example, when the number is three, for the partial light La representing the object A whose distance boundary is nearest to the observer V, the convex lens 15 is not to be assigned.

The optical path selecting circuit 12 receives all the partial lights processed in the focal length changing section 11, and, selects, beginning with the partial light for the shortest distance boundary, a light in an extremely short interval. The optical path selecting circuit 4 repeats the aforementioned selection process. Also, the optical path selecting circuit 4 sequentially output to a lens 5 the selected light. The outputted light is three-dimensional image light Lt which represents a plurality of virtual objects each having a different position from one another.

In order to execute aforementioned process, the optical path selecting circuit 12 includes a predetermined number of reflection component 16 and (2ⁿ - 1) DMD 17. Each reflection component 16 and each DMD 17 are shaped the same as each reflection component 14 and each DMD 13, and are arranged in such positions which are symmetric to those of each reflection component 14 and each DMD 13 with respect to the cross median plane Ph, respectively.

Since the size of the DMD 13 and DMD 17 (particularly, the length of a diagonal line therebetween) is as small as a few inches, in order for the observer V to observe a properly sized three-dimensional image, the three-dimensional image light Lt outputted from the focal length changing device 4 is refracted by the convex lens 5, and thereby enlarging the image which is represented by the three-dimensional image light Lt outputted from the focal length changing device 4.

The reflection component 6 is, in most cases, a total reflection mirror or a half mirror, and reflects in the direction of the observer V the light refracted from the convex lens 5. Here, when the reflection component 6 is a half mirror, since a light entering in from behind the reflection component 6 transmits through the reflection component 6 toward the direction of the observer V, the observer is able to observe an image, in which a three-dimensional image represented by the light Lt outputted by the reflection component 6 is superimposed upon a view entering in the reflection component 6 from behind the reflection component 6.

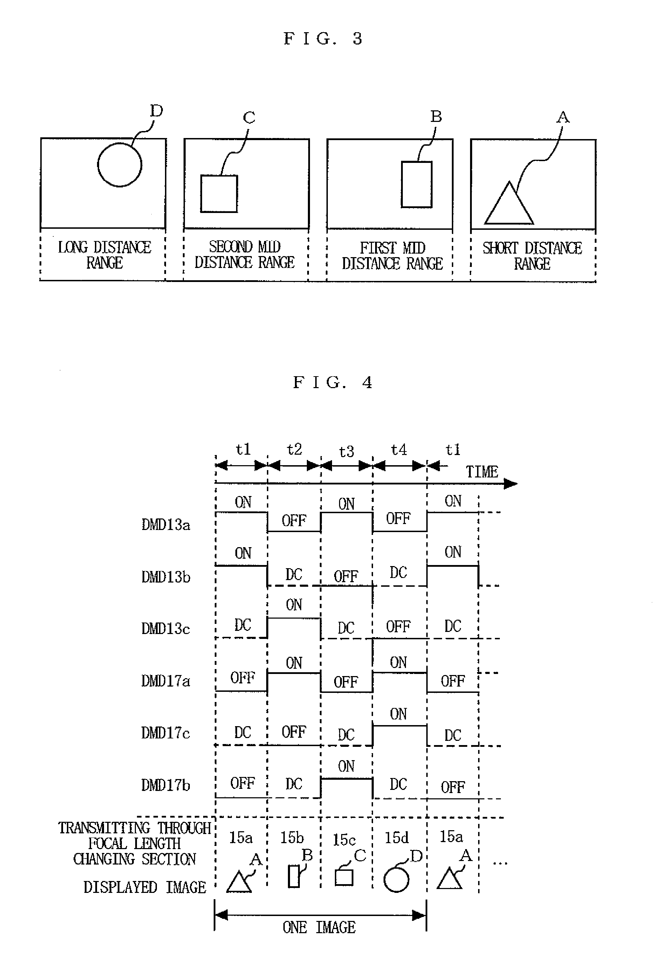

Hereinafter, a detailed exemplary motion of the three-dimensional image displaying system 1 will be described. For clarity of description, it is supposed that data inside the data accumulation section 8 represents, as shown in FIG. 3, a plurality of objects such as an object (triangle) A, an object (rectangle) B, an object (square) C, and an object (circle) D. Further, it is supposed that a depth value of a long distance boundary is assigned to the object D, a depth value of a second mid distance boundary is assigned to the object C, a depth value of a first mid distance boundary is assigned to the object B, and a depth value of a short distance boundary is assigned to the obj ect A.

The image classification section 9, as described above, generates partial data Da, Db, Dc and Dd out of the data inside the data accumulation section 8, and then sends them to the display device 3 in the order as described earlier.

Each time the display device 3 receives the partial data Da, Db, Dc or Dd, as described above, the display section 3 displays on its screen display each object A, B, C or D. By this, the generated light L exits toward the DMD 13a of the optical path branching circuit 10.

In the optical path branching circuit 10, the DMD 13a, 13b and 13c change in accordance with a drive voltage from a control section the tilt of a micro mirror 22 corresponding to each DMD (illustration of the control section is omitted). FIG. 4 is a timing chart, shown over a time axis, for a tilt of a micro mirror 22 for each DMD 13a through 13c. In FIG. 4, "ON" means turning ON all micro mirrors 22 of the corresponding DMD 13; and "OFF" means turning OFF all micro mirrors 22 of the corresponding DMD 13. Also, "DC" stands for "Don't Care", which means it can mean either "ON" or "OFF".

First, in a first interval t1, a multiplexed light L, entering the optical path branching circuit 10, represents the object A. From such multiplexed light L, the optical path branching circuit 10 sorts a light that enters in the interval t1, generates and outputs to the convex lens 15a of the focal length changing section 11 a partial light La. To be more specific, during this interval, the DMD 13a turns ON all of corresponding micro mirrors 22, reflects the entering multiplexed light L in the direction of the DMD 13b thereby generating a mid light Lib. Further, during this interval, the DMD 13b also turns ON all of corresponding micro mirrors 22, reflects the mid light Lib, which is generated from the DMD 13a in the direction of a reflection component 14a thereby generating a partial light La. The reflection component 14a reflects and provides to the convex lens 15a the partial light La which is generated from the DMD 13b. Note that during this interval, the DMD 13c is set as DC.

Also, in a following interval, t2, the multiplexed light L, entering the optical path branching circuit 10, represents the object B. From such multiplexed light L, the optical path branching circuit 10 extracts the light that enters in the interval t2, generates and outputs to the convex lens 15b of the focal length changing section 11 a partial light Lb. To be more specific, during this interval, the DMD 13a turns OFF all of corresponding micro mirrors 22, reflects the entering multiplexed light L in the direction of the DMD 13c thereby generating a mid light Lic. Also during this interval, the DMD 13c, by turning ON all of corresponding micro mirrors 22, and reflecting the mid light Lic which is generated from the DMD 13a, extracts and provides to the convex lens 15b of the focal length changing section 11 the partial light Lb. Note that during this interval, the DMD 13b is set as DC.

Also, in a following interval, t3, the multiplexed light L, entering the optical path branching circuit 10, represents the object C. From such multiplexed light L, the optical path branching circuit 10 extracts the light that enters in the interval t3, generates and outputs to the convex lens 15c of the focal length changing section 11 a partial light Lc. To be more specific, during this interval, the DMD 13a generates a mid light Lib in the same manner as in the interval t1. Also during this interval, the DMD 13c, by turning OFF all of corresponding micro mirrors 22, and reflecting the entering mid light Lib, extracts and provides to the convex lens 15c the partial light Lb. Note that during this interval, the DMD 13c is set as DC.

Also, in a following interval, t4, the multiplexed light L, entering the optical path branching circuit 10, represents the object D. From such multiplexed light L, the optical path branching circuit 10 extracts the light that enters therein in the interval t4, generates and outputs to the convex lens 15d of the focal length changing section 11 a partial light Ld. To be more specific, during this interval, the DMD 13a generates a mid light Lic in the same manner as in the interval t2. Also during this interval, the DMD 13c, by turning OFF all of corresponding micro mirrors 22, and reflecting the entering mid light Lic, extracts and provides to the convex lens 15d the partial light Ld. Note that during this interval, the DMD 13b is set as DC.

The aforementioned intervals t1, t2, t3 and t4 each are substantially a same time t, wherein the time t is an extremely short time period. With the aforementioned intervals t1 through t4 being a unit of time period, the optical path branching circuit 10 repeats the aforementioned process periodically.

Also, in the focal length changing section 11, the convex lens 15a refracts the partial light La that enters therein in the interval t1. By such refraction, a position of a virtual image of the object A represented by the partial light La is set in a short distance boundary. Also, the partial light La enters a reflection component 16 of the optical path selecting circuit 12.

Also, the convex lens 15b refracts the partial light Lb that enters therein in the interval t2. By this, a position of a virtual image of the object B represented by the partial light Lb is set in a first mid distance boundary. Also, the partial light Lb enters a DMD 17c of the optical path selecting circuit 12.

Also, the convex lens 15c refracts the partial light Lc that enters in the interval t3. By this, a position of a virtual image of the object C represented by the partial light Lc is set in a first mid distance boundary. Also, the partial light Lc enters a DMD 17b of the optical path selecting circuit 12.

Also, the convex lens 15d refracts the partial light Ld that enters in the interval t4. By this, a position of a virtual image of the object D represented by the partial light Ld is set in a first mid distance boundary. Also, the partial light Ld enters a reflection component 16b of the optical path selecting circuit 12.

As described above, the partial lights La through Ld each enter the optical path selecting circuit 12 via an optical path that is different from each other. The optical path selecting circuit 12 multiplexes over a time axis the entering partial lights La through Ld in order to generate a three-dimensional image light Lt. For such process, in the optical path selecting circuit 12, the DMD 17a, 17b and 17c change the tilt of each corresponding micro mirrors 22 in accordance with a drive voltage from the control section (illustration of the control section is omitted). FIG. 4 shows on the time axis the tilt of corresponding micro mirrors 22 for the DMD 17a through 17c.

Initially, in the first interval t1, the optical path selecting circuit 12 multiplexes the entering partial light La into a three-dimensional image light Lt. To be more specific, during this interval, a reflection component 16a provides the DMD 17b with the entering partial light La by reflecting the partial light La. During this interval, the DMD 17b turns OFF all of corresponding micro mirrors 22, and provides the DMD 17a with the entering partial light La by reflecting the partial light La.
During this interval, the DMD 17a turns OFF all of corresponding micro mirrors 22, and reflects the entering partial light La in the direction of an optical axis of a lens 5 in order to multiplex the partial light into the three-dimensional image light Lt. Also, the DMD 17c, during this interval, is not involved in a light selection and is therefor in a DC state.

Also, in the following interval, t2, the optical path selecting circuit 12 multiplexes the entering partial light Lb into the three-dimensional image light Lt. To be more specific, during this interval, the DMD 17c, while in OFF state, provides the DMD 17a with the entering partial light Lb by reflecting the partial light Lb. Also, during this interval, the DMD 17a is in an ON state, and reflects the entering partial light Lb in the direction of the optical axis of the lens 5 thereby multiplexing the partial light Lb into the three-dimensional image light Lt.
Also, the DMD 17c, during this interval, is not involved in a light selection and is therefor in a DC state.

Also, in the following interval, t3, the optical path selecting circuit 12 multiplexes the entering partial light Lc into the three-dimensional image light Lt. To be more specific, during this interval, the DMD 17b, while in a ON state, provides the DMD 17a with the entering partial light Lc by reflecting the partial light Lc. Also, during this interval, the DMD 17a is in an OFF state, and reflects the entering partial light Lc in the direction of the optical axis of the lens 5 thereby multiplexing the partial light Lc into the three-dimensional image light Lt. Also, the DMD 17c, during this interval, is not involved in a light selection and is therefor in a DC state.

Also, in the following interval, t4, the optical path selecting circuit 12 multiplexes the entering partial light Ld into the three-dimensional image light Lt. To be more specific, during this interval, first, the reflection component 16 provides the DMD 17c with the entering partial light by total reflection.
The DMD 17c, during this interval, is set to be in an ON state, and provides the DMD 17a with the entering partial light Ld by reflecting the partial light Ld. The DMD 17a, during this interval, is set to be in an ON state, and reflects the entering partial light Ld thereby multiplexing the partial light Ld into the three-dimensional image light Lt. Also, the DMD 17b, during the interval t4, is not involved in a light selection and is therefor in a DC state.

The optical path selecting circuit 12, with the aforementioned intervals t1 through t4 being a unit of time period, repeats the aforementioned process periodically. By this, the optical path selecting circuit 12 generates a three-dimensional image light Lt in which objects A through D are, in a given order, multiplexed. The three-dimensional image light Lt is outputted toward the lens 5.

Also, the aforementioned three-dimensional image light Lt outputted from the optical path selecting circuit 12 is, after passing through the lens 5, reflected by a mirror 6 in the direction of the observer V.

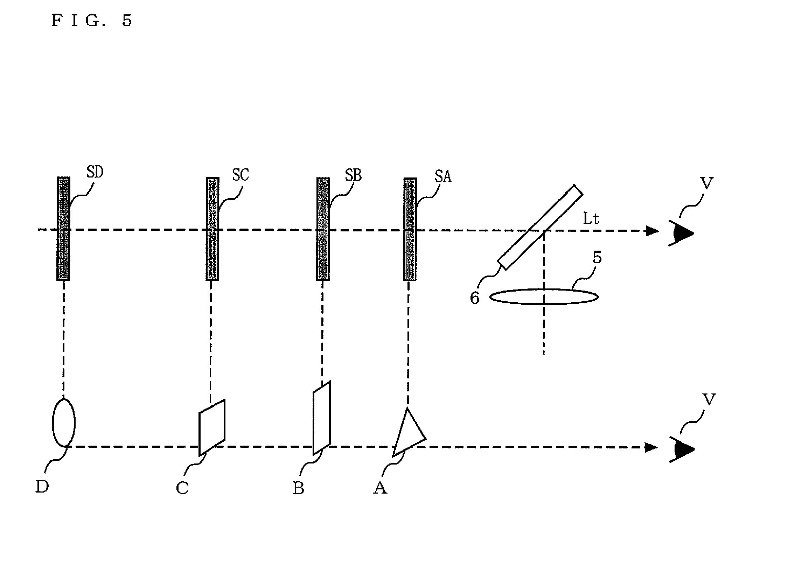

Here, as described above, the convex lens 15a having the longest focal length is assigned to the object A, the convex lens 15b having the second longest focal length is assigned to the object B, the convex lens 15c having the third longest focal length is assigned to the object C, and further, the convex lens 15d having the shortest focal length is assigned to the object D. By assigning each convex lens 15 to each object as described above, for the observer V, it appears as though, as shown in FIG. 5, the object A represented by the three-dimensional image light Lt is displayed on a virtual screen SA, which is nearest to the observer V. In a same manner, for the observer V, it further appears that the object D is displayed as a virtual image on a virtual screen SD just as the object B and the object C each are respectively displayed as virtual images each on a second nearest virtual screen SB and on the third nearest virtual screen SC, respectively.

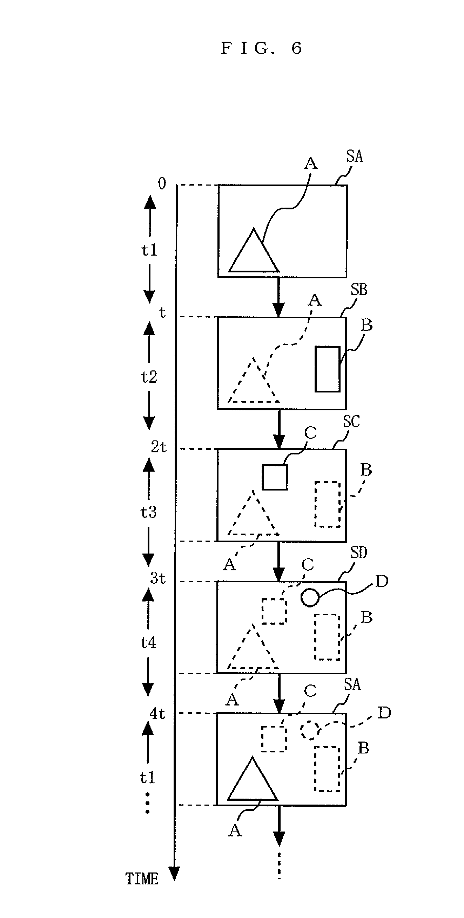

Also, the image on the virtual screen alternates in an interval t as shown in FIG. 6. To be more specific, in the first interval t1, the virtual image of the object A is visually recognized by the observer V. In the following interval t2, the virtual image of the object B is visually recognized by the observer V, and the residual image of the object A (see a dotted line) remains in the observer V's retina. In the following interval t3, the virtual image of the object C is visually recognized by the observer V, and a residual image of the objects A and B remains in the observer V's retina. In the following interval t4, the virtual image of the object D is visually recognized by the observer V, and then the virtual images of the other objects A through C become a residual image. Such alternation of the images in the intervals t1 through t4 is periodically executed.

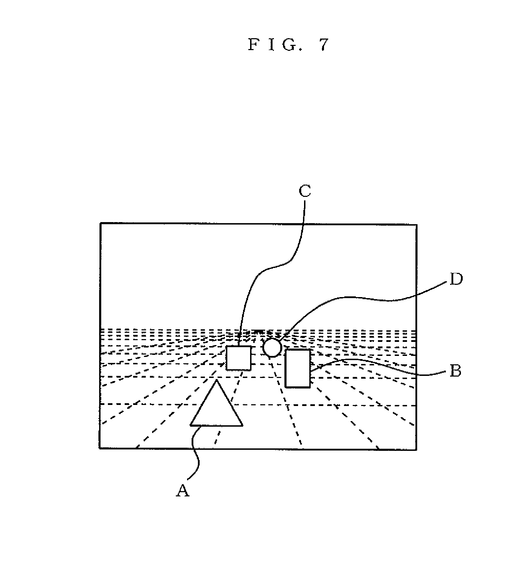

By the alternation of the four images, a three-dimensional image, in which four objects A through D are multiplexed, is offered to the observer V as shown in FIG. 7. Note that a grid of dotted lines and horizontal lines are indicated only for the purpose of showing a sense of depth.

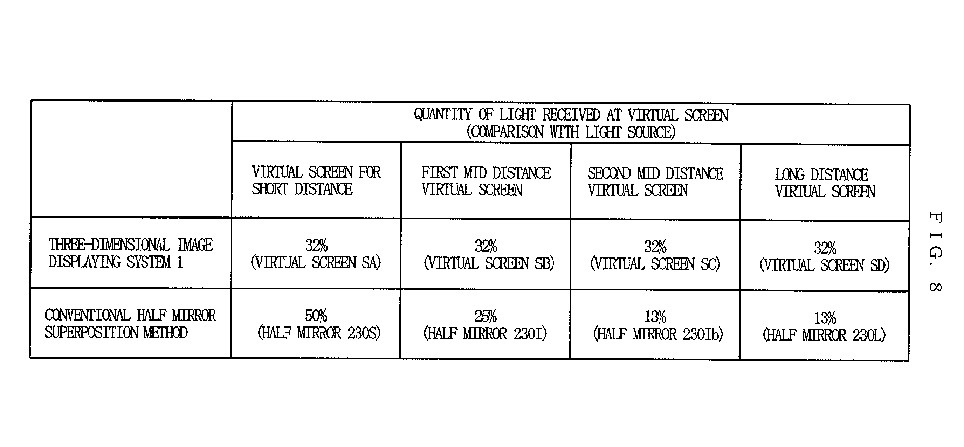

Here, FIG. 8 is a chart showing a technical effect of the present three-dimensional image displaying system 1. To be more specific, FIG. 8 is a chart for showing a contrast between a quantity of light received by the virtual screens, SA, SB, SC and SD, of the present three-dimensional image displaying system 1, with a quantity of light received by half mirrors (virtual mirror) 230S, 230I, 230Ib and a total reflection mirror 230L (see FIG. 19) of a three-dimensional image displaying system having applied thereon a conventional half mirror method. Note that, although not shown in FIG. 19, the half mirror 230Ib is a half mirror set exemplarily between the half mirror 230I and the total reflection mirror 230L for the purpose of describing the present technical effect. Also, it is supposed that, as seen from the observer V, the depth to the virtual screen SA and the depth to the half mirror 230S are the same, the depth to the virtual screen SB and the depth to the half mirror 230I are the same, the depth to the virtual screen SC and the depth to the half mirror 230Ib are the same. Further, it is supposed that the strength of the display device 3 as a light source equals the strength of all the display sections 227 combined as a light source.

According to the conventional three-dimensional image displaying system, assuming that the transmittance of the half mirrors 230S, 230I and 230Ib each are 50%, about 13% (≒ 0.5³) of a light emitted by the display section 227L reaches the observer V since the light from a display section 227L and that from a display section 227Ib, which are reflected by the total reflection mirror 230, transmits through the half mirror 230S, 230Ia or 230Ib. Also, the light from the display section 227Ia and the light from the display section 227S are reduced, respectively, to 25% and 50% of the original when they reach the observer V. Therefore, the observer V would find it especially difficult to see the images coming from the display section 227L and the display section 227Ib.

According to the present three-dimensional image displaying system 1, however, the reflectance of the each DMD 13 and each DMD 17 are approximately 75%. In the present three-dimensional image displaying system 1, since a light emitted by the display device 3 is reflected by four DMDs before reaching the observer V, approximately 32% (≒0.75⁴) of the light emitted by the display device 3 will be received by the observer V. That is to say, with the present three-dimensional image displaying system 1, regardless of a position of a virtual screen, approximately 32% of a light emitted by the display device 3 is to be received by the observer V, and therefore, a three-dimensional image that is equally bright throughout the image can be visually recognized by the observer V regardless of a sense of depth of an object.

Also, even if a number of times for reflections of the light emitted by the display device 3 is increased to six by adding a DMD to the optical path branching circuit 10 and to the optical path selecting circuit 12, that is, if a number of distance boundaries is increased to eight, approximately 18% (≒0.75⁶) of the light, which is emitted by the display device 3, is to be received by the observer V.

On the other hand, if a number of distance boundary is increased to eight for the conventional three-dimensional image displaying system, at least seven half mirrors 230 will be required. In such case, a quantity of the light for an image displayed on the farthest virtual screen will be reduced to approximately 0.8% of that of the original light, which is unlikely to be visually recognized by the observer V.

As described above, according to the present three-dimensional image displaying system 1, by using the aforementioned DMD, a light emitted by the display device 3 can be received by the observer V without the quantity of the light being reduced. By this, the three-dimensional image displaying system 1 can provide an observer with a three-dimensional image that is easy to see.

### (First Variant)

According to the embodiment described above, all micro mirrors 22 of each DMD are controlled such that they simultaneously face the same direction in each interval t1 through t4. Therefore, a three-dimensional image as shown in FIG. 7, namely, a three-dimensional image which does not have black for a background, is visually recognized by the observer V. However, in the present variant, a three-dimensional image displaying system 1 operable to provide a three-dimensional image having black for the background will be described.

Note that the three-dimensional image displaying system according to the present variant, compared with the three-dimensional image displaying system 1 according to the first embodiment, is only different in a tilt control for a micro mirror 22 included in DMD 13 and 17. Therefore, according to the present variant, for settings equivalent to that in the three-dimensional image displaying system 1 according to the first embodiment will be given similar reference marks, and the description thereof is omitted.

Hereinafter, the tilt control for a micro mirror 22 included in the DMD 13 will be described. Basically, the DMD 13 is given a state of "ON", "OFF" or "DC" as previously described with reference to FIG. 4. Note that in the DMD 13 only a micro mirror 22, which reflects a light representing the outline of an object displayed in each interval t1 through t4, is turned "ON" or "OFF" as shown in FIG. 4. That is, the micro mirror 22, which reflects the light representing the outline of the object displayed in each interval t1 through t4, is given a reversed state, compared with the description above for the first embodiment, of "OFF" and "ON".

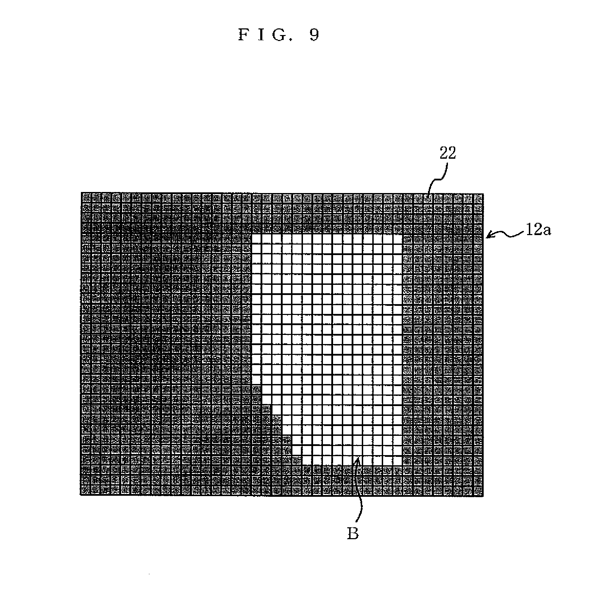

For example, in the interval t2, a light displaying an object B is reflected by a DMD 13a. Here, FIG. 9 is a diagram showing the DMD 13a, as seen from above, reflecting the light as described. In FIG. 9, a plurality of minute grids each show a micro mirror 22. For convenience of illustration, a reference mark "22" is given to only one grid. Also, although there are several hundreds of thousands of micro mirrors in a DMD, for convenience of description, 1200 (which is, 30 micro mirrors in a vertical direction multiplied by 40 micro mirrors in a horizontal direction) micro mirrors are shown. Of the micro mirrors 22, one that is turned "OFF" in the interval t2, is the one that is assigned, as shown in FIG. 9, to a pixel of the outline of the object B.

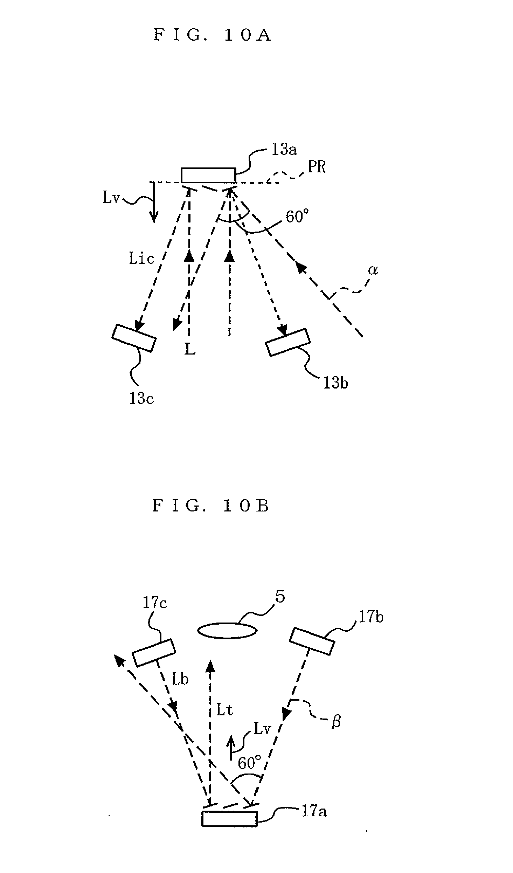

By this, as shown in FIG. 10A, of an entering light L, one that shows the outline of the object B is reflected as a mid distance light Lic in the direction of the DMD 13c. On the other hand, in the interval t2, in the DMD 13a, the micro mirror 22 that is assigned to the pixel of the outline of the object B is set as "ON". In order for the micro mirror 22 with such setting to reflect the light in the direction of the DMD 13a, the light must enter, as shown in FIG. 10A, from the direction of a 40° left (see an α line) with respect to the normal line Lv. However, there is no light source from such direction, let alone a DMD 13. Therefore, a part corresponding to the outline of the object B is to be displayed in black.

Also, in the DMD 13a shown in FIG. 10A, the micro mirror 22 that is ON is operable to reflect the entering light L in the direction of the DMD 13b. Since the DMD 13b is set as DC in the interval t2, the light entering from the direction of the DMD 13a passes through a convex lens 15a or a convex lens 15c during this interval so as to be sent to the DMD 17b of the optical path selecting circuit 12. However, in the interval t2, the DMD 17b is set as DC and the DMD 17a is set as ON. Therefore, as shown in FIG. 10B, even if the light enters the DMD 17a from the direction of the DMD 17b (see an β line), the DMD 17a does not reflect the entering light in the direction of the lens 5.

Due to a control described above, in the interval t2, only a light having traveled from a DMD 13a to a DMD 13c to a convex lens 5b to a DMD 17c and to a DMD 17a is to enter the lens 5. Therefore, during the interval t2 in the DMD 13a, the light being reflected by the micro mirror 22 that is ON does not reach the observer V, and as a result, a three-dimensional image having an area, besides an area for the object B, being black is visually recognized by the observer V.

Now, for example, the object B is to be visually recognized by the observer V as though the object B is positioned farther away from the observer V than the object A is positioned from the observer V. If the objects A and B overlap each other when observed by the observer V, as for the object B which is displayed after the object A is displayed, a part of the object B, which overlaps with the obj ect A, will be seen through the obj ect A if the overlapping part is displayed. In order to solve such problem, the micro mirror 22 which reflects the overlapping part of the object B will be set as "ON" as shown in FIG.9.

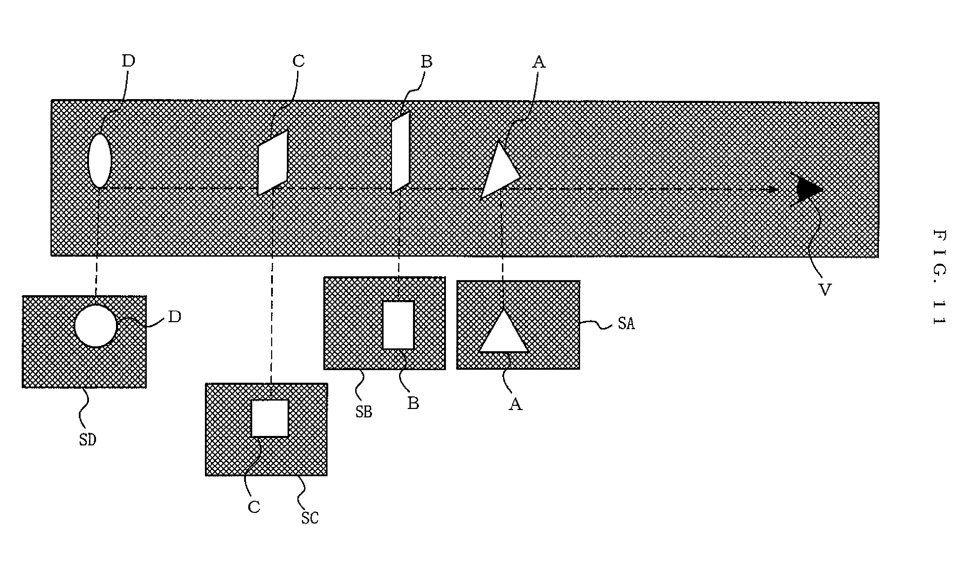

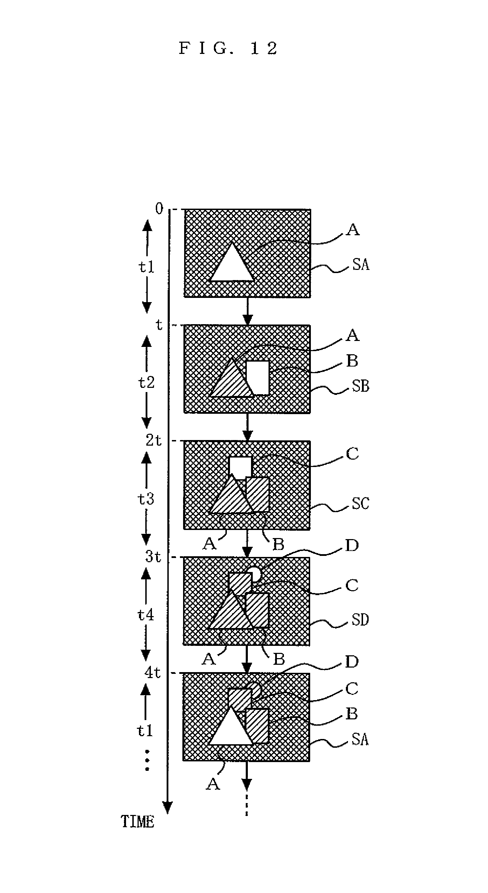

The procedure is the same for other intervals, t1, t3 and t4. By this, over each virtual screen SA though SD the object A through D with its background being black is respectively displayed as shown in FIG. 11, and images each showing the object A through D are alternated in an interval t as shown in FIG. 12. By this, the present invention can provide the observer V with a three-dimensional image that the observer can see without feeling a sense of unnaturalness.

### (Second Variant)

Also, although there is one focal length changing device 4 in the three-dimensional image displaying system 1 in the aforementioned embodiment, a plurality of focal length changing devices 4 can be provided thereto. In a present variant, an example with a three-dimensional image displaying system having a plurality of focal length changing devices 4 will be described.

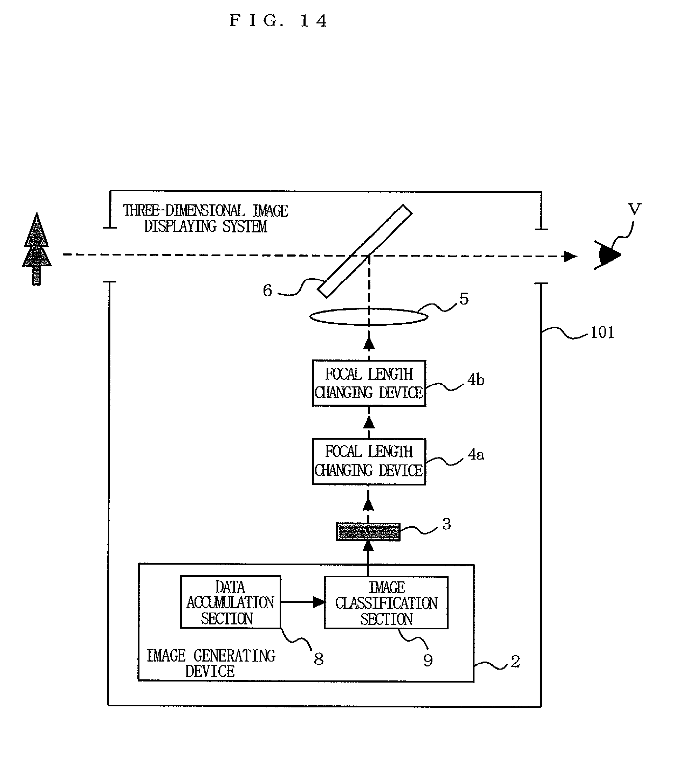

FIG. 14 is a schematic diagram showing an entire configuration of a three-dimensional image displaying device 101. In FIG. 14, the three-dimensional image displaying system 101 is, compared with the three-dimensional image displaying system 1 described above, only different in that instead of the focal length changing device 4, two focal length changing devices, 4a and 4b, which are connected in series, are provided. Besides which point, there is no difference between the three-dimensional image displaying systems 1 and 101. Therefore, in FIG. 14, a configuration equivalent to that in FIG. 1 will be given similar reference marks, and the description thereof is omitted.

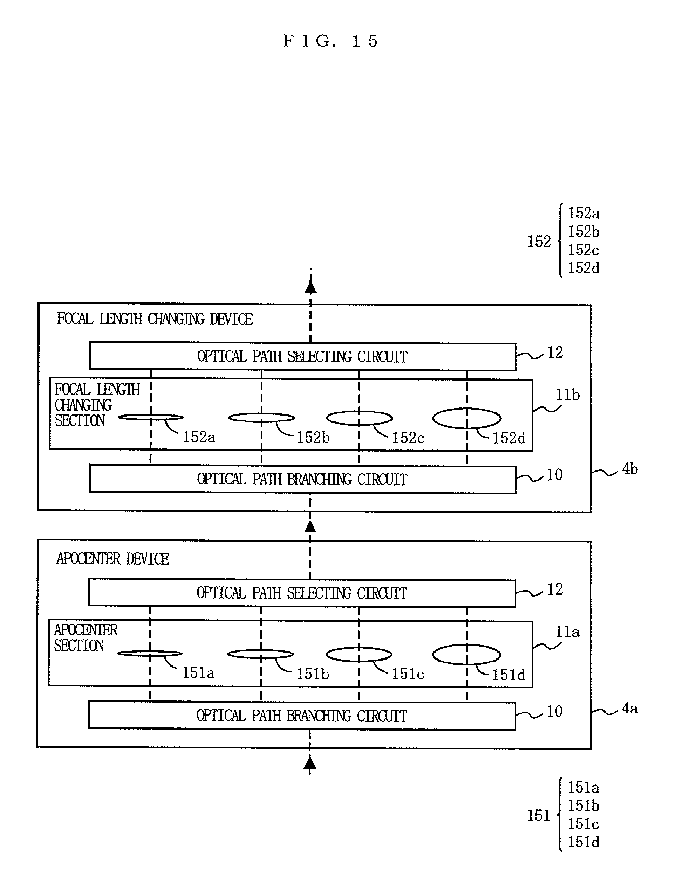

Also, FIG. 15 is a schematic diagram showing a detailed configuration of the focal length changing devices 4a and 4b indicated in FIG. 14. In FIG. 15, the focal length changing devices 4a and 4b, compared with the focal length changing device 4 indicated in FIG. 1, are different in that a focal length changing section 11a and a focal length changing section 11b are provided respectively thereto instead of the focal length changing section 11. Besides which point, there is no difference between the focal length changing device 4 and the focal length changing devices 4a, and 4b. Therefore, in FIG. 15, a configuration equivalent to that in FIG. 1 will be given similar reference marks, and the description thereof is omitted.

The focal length changing sections 11a and 11b each include 2ⁿ or (2ⁿ - 1) convex lenses 151 and 152, respectively. Note that in FIG. 15, in the same manner as in the previous embodiment, the 2ⁿ or (2ⁿ - 1) convex lenses 151 and 152 include the focal length changing sections 11a and 11b respectively. Also, FIG. 15 shows an example in which n is 2. With such setting, four optical paths are formed inside the focal length changing device 4a, and also, four optical paths are formed inside the focal length changing device 4b. Therefore, by optically connecting the focal length changing devices 4a and 4b in series, 16 (4 x 4) types of optical paths are formed in a space between the display device 3 and the lens 5. Here, the focal length of each convex lens 151 and 152 is selected such that combinations of focal lengths of a convex lens 151 selected from all convex lenses 151, with a convex lens 152, selected from all convex lenses 152 are different from one another. Also, the three-dimensional image displaying system 101 can, when a tilt of a micro mirror of a DMD is controlled in the same manner as in the previous embodiment, provide the observer V with a three-dimensional image having 16 variant senses of depth.

Also, as for a quantity of a light in the present variant, since 8 (4 times x 2) reflections are conducted in the DMD, approximately 10% (=0.75⁸) of a light emitted by the display device 3 will be received by the observer V. Such value is inferior to that from the previous embodiment. However, in an attempt to provide a three-dimensional image having 16 variant senses of depth by using the conventional system having applied thereon a half mirror superposition method, the quantity of a light will be reduced to 6% at a fourth virtual screen from where the observer V is. Also, at a seventh virtual screen, the quantity of light will be reduced to 1% of that emitted by the display device, and at a sixteenth virtual screen, which is the farthest, the quantity will be reduced to approximately to 0.003%. That is to say that, in reality, the half mirror superposition method cannot express the multiple senses of depth like the present variant can.

### (Third Variant)

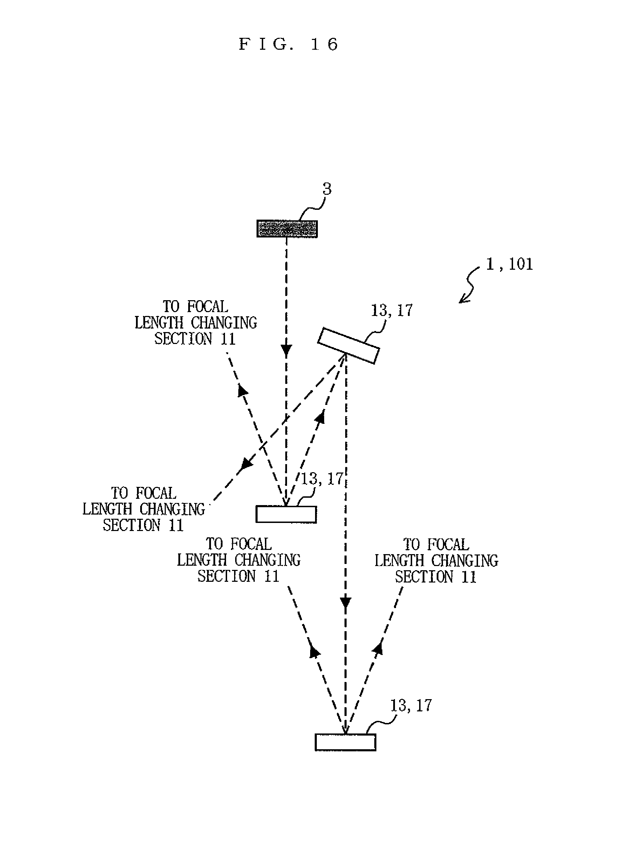

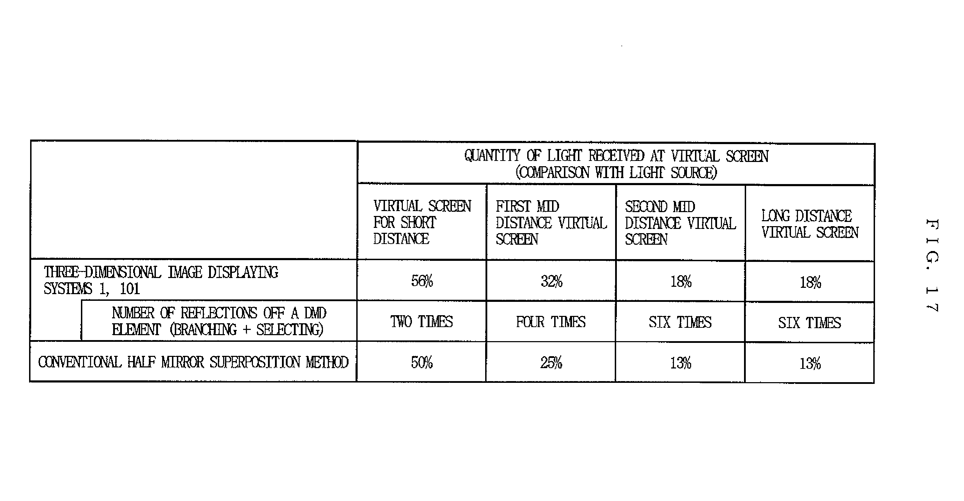

In the aforementioned embodiment and variants, a DMD 13a, which is to a basis of positioning of other components, is positioned over the optical axis of the lens 5, and the two DMDs, 13b and 13c, are positioned to be symmetrical to each other in relation to the optical axis. Also, the DMDs 17a through 17c are positioned in the same manner. However, in the three-dimensional image displaying systems 1 or 101, (2ⁿ - 1) DMDs 13 and DMDs 17 can be positioned in series as well. In a case the DMDs are positioned in series, the quantity of light received by the observer V will become smaller when more reflections are to be conducted by the DMD 13 and DMD 17. In such case, however, the DMD 13 and DMD 17 can be positioned such that an optical path for a light displaying an object far from the observer V becomes long, and an optical path for a light displaying an object near the observer V becomes short; or such that the number of reflections for the object that is far is increased, and the number of reflections for the object that is near is decreased. Also, as for the three-dimensional image displaying system 1 or 101 indicated in FIG. 16, a contrast between a quantity of light of the three-dimensional image displaying systems 1 and 101 and that of the conventional three-dimensional image displaying system is indicated in the same manner as in the previous embodiment in FIG. 17.

For the description above, it is described that each focal length changing section 11 comprises a convex lens, but it is not restricted thereto. A concave lens, a convex mirror, a concave mirror, a combination thereof, or a HOE (holographic optical element) can be used instead of the convex lens so as to comprise a focal length changing section 11.

For the description above, it is described that a depth value for each object is stored in the data accumulation section 8, but this is not restricted thereto. A distance boundary that is pre-assigned to each object can be stored in the data accumulation section 8.

For the description above, it is described that a half mirror is provided as a reflection component 6, but a HOE (holographic optical element) having the characteristic of half mirror can be provided instead.

Also, in the aforementioned first variant, by controlling a tilt of the micro mirror 22, an image of a part of a plurality of objects overlapping with each other was prevented from being seen by the observer V. But instead, the display device 3 can be set not to display a part where all objects overlap with each other except for the one object nearest to the observer V.

Also, when the reflection component 6 is a half mirror, the observer V is to observe an image of a three-dimensional image superimposed over an actual scenery. In such case, the display device 3 can be set not to output a light representing a part of the image, which needs to be displayed as farther than the actual scenery. Also, the display device 3 can also be set to emit a light representing an image that is fully in accordance with given data regardless of overlapping of objects, or overlapping of an object with an actual scenery.

Also, in the aforementioned embodiment and in each variant, a setting, in which there is no reflection component 6, can be applied. When no reflection component 6 is used, as the observer V directly looks at the lens 5, a three-dimensional image is visually recognized by the observer V.

While the invention has been described in details, the foregoing description is in all aspects illustrative and not restrictive. It is understood that numerous other modifications and variants can be devised without departing from the scope of the invention.

### INDUSTRIAL APPLICABILITY

A three-dimensional image displaying system according to the present invention can be applied to a display device, which is required to provide an observer with a three-dimensional image that is easy to see, such as a head-up display, an automobile simulator, a flight simulator or a game machine, and can be applied for an attraction operable to provide a three-dimensional image in a theme park or an amusement park.

## Claims

1. A three-dimensional image displaying system, comprising:
an image generating device for classifying, in accordance with a perspective distance, respective pieces of data representing a plurality of objects, and for sequentially outputting the data;
a display device for sequentially executing a display process for the respective pieces of data outputted by the image generating device, and for emitting a plurality of lights, which represent the plurality of objects, multiplexed on a time axis; and
at least one focal length changing device for providing stereoscopic effect or a distance perspective to each of the plurality of objects represented in the multiplexed lights emitted by the display device, and for generating the plurality of lights which are visually recognized in a three-dimensional manner,
the focal length changing device comprising:
an optical path branching circuit for branching, by periodically changing at a predetermined interval a tilt of a micro mirror of at least one DMD internally included in the optical path branching circuit, a plurality of partial lights each representing an object from the multiplexed light emitted by the display device;
a focal length changing section for providing the stereoscopic effect or the distance perspective, which varies among the plurality of objects, to the each of the plurality of objects represented by the partial lights branched by the optical path branching circuit; and
an optical path selecting circuit for selecting, by periodically changing at a substantially same interval as the predetermined interval a tilt of a micro mirror of at least one DMD internally included in the optical path branching circuit, at the predetermined interval the plurality of the partial lights outputted by the focal length changing device, for sequentially outputting the selected partial lights, and for generating three-dimensional image lights.

2. The three-dimensional image displaying system according to claim 1, wherein the focal length changing section comprises at least one optical component having a particular focal length assigned to a corresponding one of the plurality of partial lights branched by the optical path branching circuit.

3. The three-dimensional image displaying system according to claim 2 wherein, the optical component is selected from a group consisting of a convex lens, a concave lens, a convex mirror and a concave mirror.

4. The three-dimensional image displaying system according to claim 2, wherein the optical component is a holographic optical element.

5. The three-dimensional image displaying system according to claim 1, wherein a plurality of the focal length changing devices are optically connected in series.

6. The three-dimensional image displaying system according to claim 5, wherein
the focal length changing section further comprises at least one optical component assigned to a corresponding one of the partial lights branched by the optical path branching circuit, and
a focal length of a combination of a plurality of optical components selected from each of the plurality of the focal length changing sections is different from each other.

7. The three-dimensional image displaying system according to claim 1 further comprising at least one reflection component for reflecting in a direction of an observer a three-dimensional image light outputted by the focal length changing device.

8. The three-dimensional image displaying system according to claim 7, wherein the reflection component reflects the three-dimensional-image lights, whereby a three-dimensional image having a plurality of objects three-dimensionally synthesized therein is visually recognized by the observer.

9. The three-dimensional image displaying system according to claim 7, wherein the reflection component reflects light outputted by the optical path selecting circuit in a predetermined direction, and transmits light entering in from behind the reflection component in a transmitting direction.

10. The three-dimensional image displaying system according to claim 7, wherein the reflection component is selected from a group consisting of a half mirror, a total reflection mirror and a holographic optical element.

11. The three-dimensional image displaying system according to claim 1, wherein the DMD includes a plurality of micro mirrors, and selects, by changing a tilt of at least one micro mirror of a predetermined position, a part of the light emitted by each display section.

12. The three-dimensional image displaying system according to claim 11, wherein the micro mirror of the predetermined position corresponds to a part in which there is no object in the three-dimensional image represented by the three-dimensional image light.

13. The three-dimensional image displaying system according to claim 11, wherein the micro mirror of the predetermined position corresponds to a part on a far side of a part in which a plurality of objects overlap with each other in the three-dimensional image represented by the three-dimensional image light.

14. The three-dimensional image displaying system according to claim 10, wherein
the reflection component reflects light outputted by the optical path selecting circuit in a direction of the observer, and transmits light entering in from behind the reflection component in a transmitting direction, and
the micro mirror of the predetermined position corresponds to a part located farther than where the object existing behind the reflection component is, wherein the object is included in the image represented by the three-dimensional image light.
